# EUROPEAN PATENT APPLICATION

(11) **EP 2 219 246 A1**
(43) Date of publication of application: **18.08.2010**
(21) Application number: 09010755.8
(22) Date of filing: 10.02.2009
(51) Int. Cl.: H01M 2/10, H01M 2/20, H01M 2/34, H01M 10/44, H01M 10/50, B60L 3/00

(54) **A safety arrangement for a motor vehicle**

(62) Divisional of application: 09001815.1
(71) Applicant: Autoliv Development AB, 447 83 Vårgårda (SE)
(72) Inventor: Knight-Newbury, Heath, 413 28 Goteborg (SE)
(74) Representative: Parry, Simon James

(57) **Abstract**

A safety arrangement (1) is disclosed which is suitable for use in a motor vehicle comprising an electrical energy storage unit (2), such as a large capacity battery or capacitor. The invention is particularly suitable for use in electric or so-called hybrid motor vehicles. The arrangement of the invention comprises: a structure (3) configured to define a substantially enclosed space (8) around the storage unit (2); a source of compressed gas (10) provided in fluid communication with said enclosed space (8); and a flow-release actuator (13). The flow-release actuator (13) is actuable upon receipt of an actuation signal so as to release a flow (18) of gas from said source and into said space (18), the arrangement being configured such that said flow (18) is effective to raise the internal pressure within said space (8) above atmospheric pressure.

## Description

The present invention relates to a safety arrangement for a motor vehicle. More particularly, the invention relates to a safety arrangement which is configured for use in an electric vehicle, or a so-called hybrid motor vehicle.

In view of increasing concerns over the environmental impact of motor vehicles powered by internal combustion engines, there is now increased interest and importance in providing so called "cleaner" motor vehicles which produce less pollution in the form of gases which are deemed harmful to the environment. Accordingly, it is now becoming more and more common to provide motor vehicles which are powered electrically, at least during periods of their operation. For example, it has been proposed to provide electric vehicles which are driven by a large electrical motor drawing its power from a rechargeable battery.

It has also been proposed to provide so-called "hybrid" motor vehicles which typically combine an efficient internal combustion engine with an electric motor. Hybrid vehicles of this type are configured to be driven by the electric motor whenever possible or convenient, but are driven by the internal combustion engine when the propulsive power offered by the motor is insufficient to meet the instant performance demand, for example because the demand simply exceeds the performance limits of the motor, or because the source of electrical energy from which the motor draws its power contains insufficient charge. In such an arrangement, the motor typically draws its electric power from either a rechargeable battery or a series of capacitors, with the battery or capacitors being arranged to charge from an alternator connected to the engine when the combustion engine is running.

As will be appreciated, electrically powered vehicles, and so-called hybrid vehicles of the general type described above therefore require relatively large electrical energy storage units, such as batteries or capacitors, in order to provide sufficient electrical power for the propulsive motor. Accordingly, such storage units are typically configured to be very high voltage (typically approximately 300V) and to store a very significant amount of electrical energy (typically between 2 - 10 kWh), and as such represent a significant electrical hazard, particularly in the event of the vehicle being involved in a crash, or an internal short-circuit occurring within the battery. Additionally, storage units of a type suitable for use in electric or hybrid vehicles presently contribute very significantly to the overall cost of the vehicle. For example, it is not uncommon for the energy storage unit of such a vehicle to account for 10-30% of the total cost of the vehicle. It is therefore desirable to protect the storage unit from damage in the event that the vehicle is involved in an accident.

As will be appreciated, electrical storage devices such as capacitors or batteries of the type described above can become extremely hot in the event of a short-circuit occurring either internally, or externally as a result of a crash, and hence represent a risk of fire or explosion in such circumstances.

Another concern with high-energy electrical arrangements of this type is that damage caused to a motor vehicle in the event of an accident can cause parts of the internal circuitry of the vehicle to become damaged and expose live wiring which presents a shock hazard for the driver and passengers of the vehicle, and also to any rescue personnel in attendance.

There is therefore a need for a safety arrangement which addresses these problems and risks.

It is an object of the present invention to provide an improved safety device for a motor vehicle.

According to the present invention, there is provided a safety arrangement for a motor vehicle comprising an electrical energy storage unit, the arrangement comprising: a structure configured to define a substantially enclosed space around said storage unit; a source of compressed gas provided in fluid communication with said enclosed space; and a flow-release actuator, the flow-release actuator being actuable upon receipt of an actuation signal so as to release a flow of gas from said source and into said space, the arrangement being configured such that said flow is effective to raise the internal pressure within said space above atmospheric pressure.

The gas is preferably a substantially inert gas such as Argon. However other gases may be used. It is preferably for the gas to be non-conductive of electricity, non-flammable, and preferably non-oxidising. Nitrogen and Carbon Dioxide represent possible alternatives to Argon.

Preferably at least part of said structure is substantially expandable so as to expand upon the flow of said gas into said space. Furthermore, in a preferred embodiment said expandable part is substantially plastically deformable.

Advantageously, said structure is configured such that expansion of said expandable part is effective to increase the volume of said space.

Conveniently, said expandable part of said structure has an initial folded configuration, and is configured so as to at least partially unfold and thereby expand upon the flow of said gas into said space.

It is envisaged that embodiments of the invention will be suitable for use with an electrical storage unit of a type comprising a plurality of sub-units electrically connected in series, in which case, the safety arrangement may be configured such that expansion of said expandable part is effective to electrically disconnect said sub-units from one another.

Preferably said sub-units are each secured to respective parts of said structure and are electrically connected to one another by breakable connections, said structure being configured such that expansion of said expandable part of the structure is effective to move said respective parts away from one another, thereby breaking said connections.

Advantageously, the safety arrangement is configured such that expansion of said expandable part is effective to at least partially discharge said storage unit.

Conveniently, said expandable part is provided within said substantially enclosed space, and is arranged such that its expansion is effective to move at least one discharge resistor into electrical connection with said storage unit.

Preferably, at least one aperture is provided through said expandable part and the expandable part is positioned substantially across an inlet for said flow in to said space.

Advantageously, the or each said discharge resistor is mounted to said expandable part of the structure.

In embodiments of the invention suitable for use with a said electrical storage unit of a type comprising a plurality of sub-units electrically connected in series, there are preferably provided a plurality of said discharge resistors mounted to said expandable part, each said resistor being arranged for electrical connection across a respective said sub-unit upon expansion of said expandable part.

Conveniently, at least one vent aperture is provided in said structure.

Advantageously, said structure comprises a housing configured to substantially define said substantially enclosed space.

Preferably, said gas is a substantially inert gas.

According to another aspect of the present invention, there is provided a motor vehicle comprising a safety arrangement of the type described above. In such an arrangement, it is possible for said structure to be at least partly defined by the structure of the motor vehicle.

So that the invention may be more readily understood, and so that further features thereof may be appreciated, embodiments of the invention will now be described by way of example with reference to the accompanying drawings in which:
Figure 1 is a schematic illustration showing a safety arrangement in accordance with a first embodiment of the present invention, in combination with a multi-cell battery;
Figure 2 is a schematic illustration showing a safety arrangement in accordance with a second embodiment of the present invention, in combination with a multi-cell battery;
Figure 3 is a schematic illustration corresponding generally to Figure 2, but illustrating the arrangement in an altnernate, actuated, condition;
Figure 4 is a schematic illustration showing a safety arrangement in accordance with a third embodiment of the present invention, in combination with a multi-cell battery;
Figure 5 is a cross-sectional view taken through one of the cells of the battery illustrated in figure 4, showing the cell attached to a battery housing structure; and
Figure 6 is a schematic illustration corresponding generally to Figure 4, but illustrating the arrangement in an altnernate, actuated, condition.

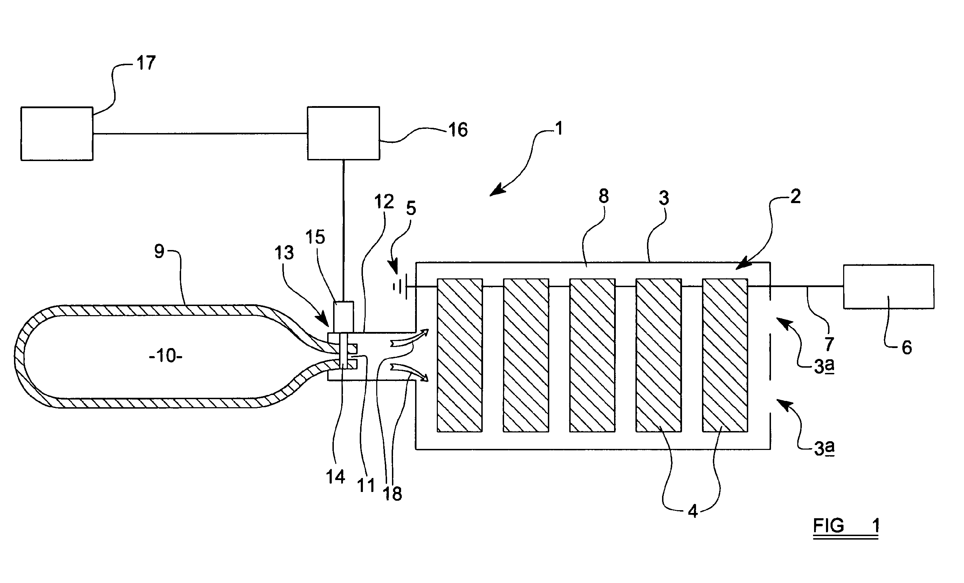

Referring now in more detail to Figure 1, there is illustrated a safety arrangement 1 in combination with an electrical energy storage unit 2. The storage unit is provided within a housing 3 and in the particular embodiment illustrated, the storage unit 2 takes the form of a battery comprising a plurality of sub-units in the form of individual cells 4 electrically connected in series. For example, it is envisaged that the battery 2 could be a Lithium Ion battery comprising a series of cells connected so as to give the battery a total output voltage of approximately 300V and a total energy level of 2-10 kWh. Alternatively, however, it is envisaged that the storage unit could comprise a plurality of electrically connected capacitors.

As is generally conventional, the battery 2 is earthed by being electrically connected to the metal structure of the motor vehicle as illustrated schematically at 5, and is connected to the electrical circuitry 6 of the vehicle by a conductor 7 which may take the form of a cable or conductor bus.

The housing 3 serves to define a substantially enclosed space 8 around the battery 2. However, it is to be appreciated that the housing may optionally be provided with one or more vent apertures 3a which may be initially closed by a burst disc or similar membrane arrangement. The housing is preferably made from plastically deformable material, and in preferred embodiments is made from metal.

The safety arrangement 1 includes a source of compressed gas, which preferably takes the form of a tank 9 containing a gas 10 under pressure. The gas used in the arrangement of the invention is preferably a substantially inert gas, and is also preferably substantially non-conductive of electricity, non-flammable, and non-oxidizing. Argon is particularly suitable, although Nitrogen or Carbon Dioxide could be used as alternatives.

The tank 9 has an outlet 11 which is arranged in fluid communication with a flow duct 12 which is provided in fluid communication with the enclosed space 8 within the housing. The flow duct 12 is thus arranged to direct the inert gas from the tank 9 to the battery 2 upon actuation of the system. The outlet 11 of the gas tank 9 is initially closed by a flow-release actuator 13 which can take one of several configurations.

In the illustrated example, the actuator 13 comprises a moveable element 14, such as a sliding rod or the like, which is initially provided in a position in which it blocks the outlet 11 of the tank 9. The actuator 13 also comprises a pyrotechnic charge 15, such as a squib, which is electrically connected to a control unit 16. The control unit 16 is electrically connected to a sensor 17 configured to detect the occurrence of an emergency situation likely to render the battery 2 dangerous. The sensor 17 can thus take one of several forms. For example, the sensor can take the form of a crash sensor configured to detect the occurrence, or likely occurrence of a crash involving the motor vehicle.

The control unit 16 is configured to analyse the signals generated by the sensor 17, for example by comparing the signals received from the sensor with threshold values indicative of an emergency situation, and to send an actuation signal to the pyrotechnic charge 15 in the event that the control unit determines that the battery 2 must be made safe. Upon receipt of the actuation signal from the control unit 16, the pyrotechnic charge will ignite, thereby moving the rod 14 out of its initial position, and thus opening up a flow path for the gas 10 through the outlet 11.

However, it should be appreciated that the flow-release actuator 13 could have an alternative configuration. For example, it is envisaged that the outlet 11 of the tank 9 could be initially closed by a rupturable membrane extending across the outlet, and in such an arrangement the pyrotechnic charge could be arranged to rupture the membrane directly upon ignition, or alternatively to drive an element such as a sliding rod, or even a projectile, so as to rupture the membrane.

As will thus be appreciated, the safety arrangement of the present invention is actuated upon ignition of the pyrotechnic charge 15 as described above, which is effective to open the outlet of the gas tank 9, thereby allowing a high pressure flow of gas through the outlet 11, and into the flow duct 12 from where the gas then flows into the enclosed space 8 defined by the housing 3, as indicated schematically by arrows 18. As the compressed gas is released, the reduction of pressure in the gas tank 9 causes the gas to cool rapidly.

This flow of cool gas, under high pressure, into the enclosed space 8 has two primary effects. The first effect is that the flow of gas will impinge on the individual cells 4 provided within the housing 3, thereby serving to cool the battery 2 and hence reduce the risk of the battery reaching an elevated temperature sufficient to represent an explosion or fire risk. The second effect attributable to the flow of gas into the housing is that the gas pressurises the housing 3, thereby elevating the inner pressure of the enclosed space 8 to a level substantially above atmospheric pressure outside the housing. Pressurising the housing 3 in this manner serves to increase its overall rigidity and strength, and also increases its resistance to buckling. The safety arrangement of the present invention is thus effective to provide a strong protective barrier around the battery 2, the effectiveness of the barrier being supplemented by raising its internal pressure.

As will be appreciated, the presence of the vent apertures 3a in the housing 3 allows the inflow 18 of inert gas, which will be substantially cooler than the air initially lying within the enclosed space 8, to drive the relatively warm air out of the housing 3, thereby improving the effectiveness of the safety arrangement in cooling the battery 2. In arrangements where the vent apertures 3a are initially closed by burst discs or the like, it will be appreciated that the initial inflow of relatively cool inert gas 18 is effective to increase the internal pressure of the enclosed space 8 relatively quickly, until the internal pressure reaches a predetermined level at which point the burst discs will rupture, thereby allowing a venting flow of gas to flow out of the enclosed space 8. It should be appreciated, however, that in variants of the invention, the passive burst-discs could be replaced by active venting arrangements, for example incorporating pyrotechnically openable vent apertures arranged to be opened in response to an actively monitored increase in internal pressure within the enclosed space 8.

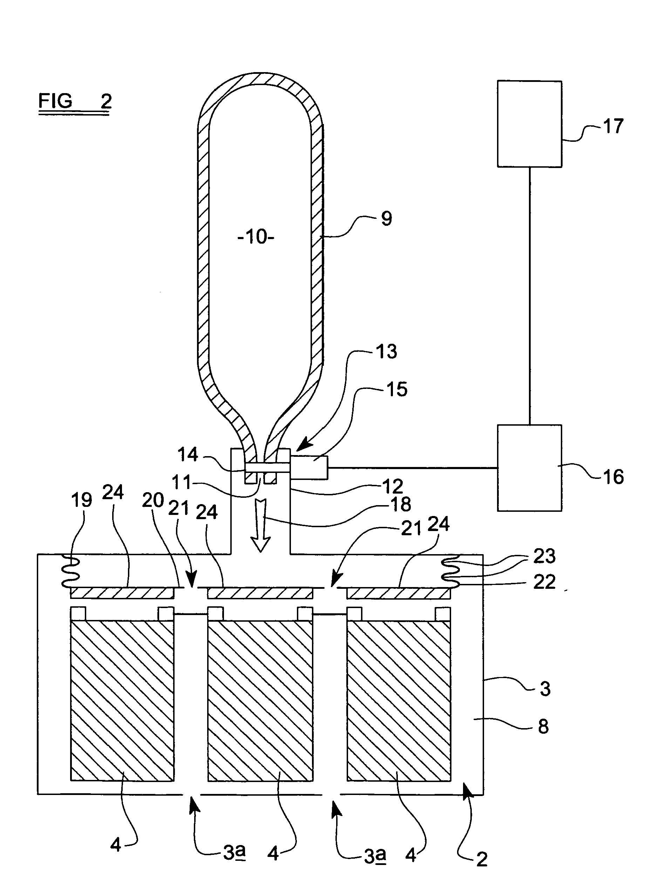

Turning now to consider figure 2, there is illustrated an alternative embodiment of the present invention which again is illustrated in combination with a multi-cell battery 2. In many respects, the arrangement of figure 2 is substantially identical to that illustrated in figure 1, and so for the sake of convenience the same reference numerals are used to indicate components identical or similar to those described above with specific reference to the arrangement of figure 1.

The most notable difference between the arrangement of figure 2 and the previously described arrangement of figure 1 is that in the arrangement of figure 2, the housing 3 incorporates an internal expandable structure 19. The expandable structure 19 is provided so as to extend substantially across the inlet port of the housing 3 which is fluidly connected to the flow duct 12. The expandable structure 19 preferably takes the form of a substantially planar metal plate 20 which is provided with a plurality of vent apertures 21 and which is connected to the housing 3 around its periphery via a plastically deformable bellows arrangement 22 which, in its initial configuration illustrated in figure 2, comprises a series of concertina-like folds 23.

In its initial configuration illustrated in figure 2, the planar plate region 20 of the expandable structure 19 is spaced above the battery 2. Attached to the under surface of the metal plate 20 are a number of discharge resistors 24, each of which is located so as to be generally aligned with and spaced above a respective cell 4. Preferably, the discharge resistors 24 are formed from ceramic material, although it will be appreciated that the discharge resistors can take any convenient form, providing that they have a high resistance to the flow of electrical current.

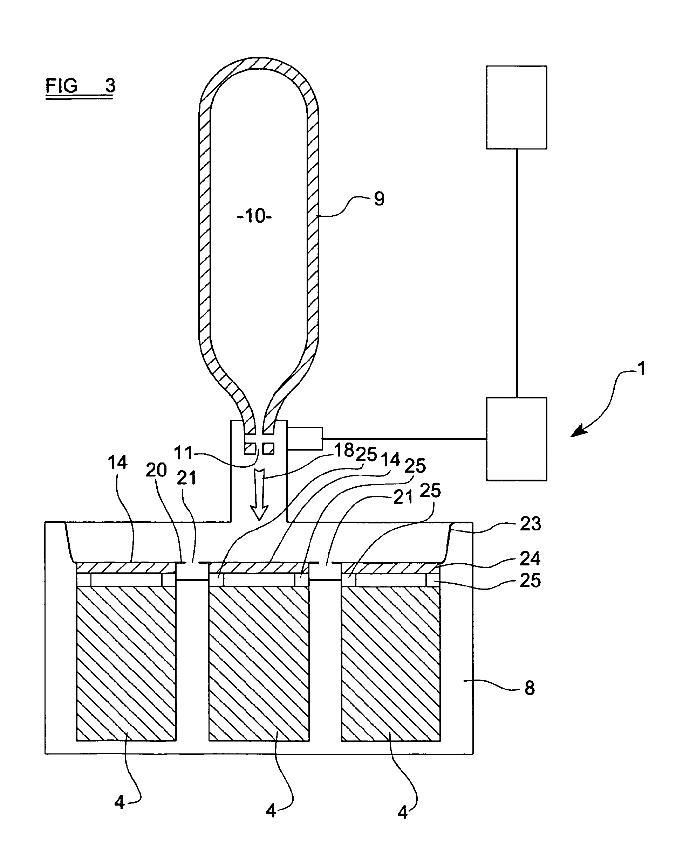

Actuation of the safety arrangement illustrated in figure 2 occurs in a generally identical manner to that of the first embodiment described above and illustrated in figure 1. As will be appreciated, however, the expandable structure 19 effectively forms an obstacle to the flow of cooling inert gas into the inner space 8 of the housing 3. The high pressure inflow 18 of inert gas is thus initially directed against the planar region 20 of the expandable structure 19 which is thus effective to drive the planar region away from the outlet 11 of the gas tank 9 so that it is driven towards the individual cells 4 of the battery 2, resulting in plastic deformation of the bellows structure 22 as it unfolds so as to adopt a configuration as indicated generally in figure 3. Figure 3 illustrates the expandable structure 19 in the configuration which it adopts following actuation of the safety arrangement 1, and it can be seen that the initially folded bellows arrangement 23 has become unfolded so as to extend downwardly, and it will also be noted that the planar metal portion 20 has been moved downwardly to a position in which each of the discharge resistors 24 makes electrical contact across the terminals 25 of each respective cell 4. The discharge resistors 24 have thus been moved so as to become connected across respective cells 4, thereby serving to discharge the cells 4 in a manner known *per se,* thereby allowing safe and fast discharge of the cells in a controlled manner.

As will be appreciated, the presence of the vent apertures 21 provided in the expandable structure 19 means that the flow of inert gas 18 is allowed to flow through the vent apertures and into the main body of the enclosed space 8, thereby cooling the battery cells 4 and also pressurising the housing 3 in the same manner as described above in the context of the arrangement shown in figure 1.

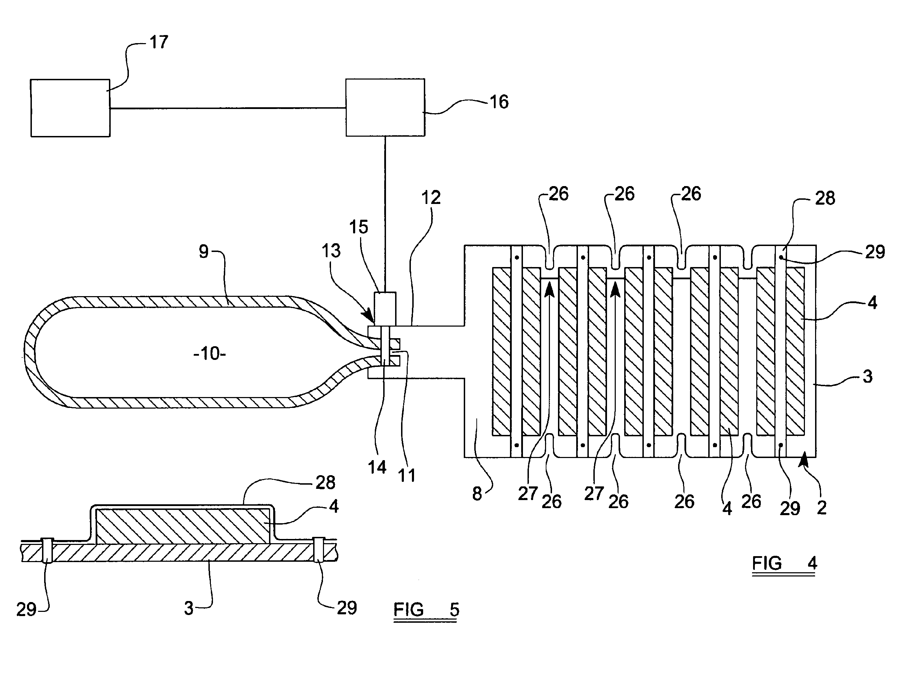

Turning now to consider figure 4, there is illustrated a further embodiment of the present invention which again shares a number of features and components with the arrangements described above and illustrated in figures 1 to 3. Such features and components are thus again identified by the same reference numerals for the sake of convenience and clarity.

The arrangement of figure 4 is characterised by the fact that the battery housing 3 is configured so as to be substantially expandable. In this regard, it will be noted that the housing 3 is initially provided with a plurality of re-entrant folds 26, each of which is provided so as to extend generally around the housing at locations generally between the positions of adjacent battery cells 4. Each of the battery cells 4 are initially electrically connected with one another by physically breakable electrical connections as indicated schematically as 27.

As indicated in figure 4, and also in figure 5, each of the individual battery cells 4 are secured to respective adjacent parts of the housing 3 so as to be fixed in position relative to the adjacent structure of the housing 3. In the specific embodiment illustrated in figures 4 and 5, each cell 4 is fixed to the inner surface of the housing 3 by a respective strap 28 which extends generally around the cell and which is secured to the housing 3 by a pair of bolts or rivets 29 located on either side of the cell 4.

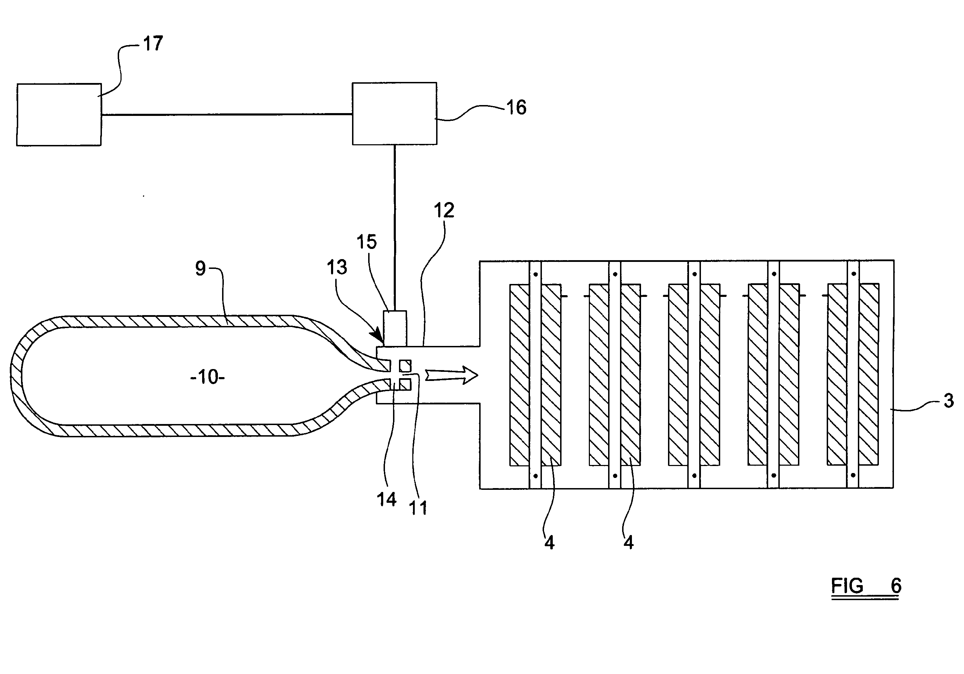

Upon actuation of the safety arrangement illustrated in figures 4 and 5, a flow of high pressure gas is again directed into the inner space 8 defined within the housing 3, thereby serving to cool the battery cells 4 and also to increase the internal pressure within the enclosed space 8. This increase in internal pressure is effective to deform the re-entrant folds 26 such that they become substantially unfolded, thereby increasing the overall dimension (and volume) of the housing 3 until it adopts a configuration illustrated in figure 6. As will be appreciated, because each of the folds 26 is initially provided between adjacent battery cells 4, and because each of the cells 4 is fixedly attached to a respective region of the housing 3, expansion of the housing 3 in this manner is effective to move the individual cells 4 apart from one another. This movement of the cells 4 away from one another serves to break the electrical connections 27 between the cells 4, thereby electrically isolating the cells from one another. By electrically disconnecting the individual cells 4 of the battery 2 from one another in this manner, the battery 2 is rendered safe because the individual voltage (for example approximately 4 volts) of each cell 4 is not hazardous.

It is also envisaged that in any of the above-described embodiments of the invention, the housing may preferably be configured so as to expand in response to being pressurized by the flow 18 of gas from the tank 9, so to thereby become spaced further away from the battery 2 located within the housing. An arrangement of this type would thus be effective to increase the impact protection offered by the housing to the battery, by increasing the distance over which the housing must be deformed in an impact before it makes potentially damaging contact with the battery. Expansion in this manner can occur through plastic deformation of the housing 3, or alternatively by providing the housing with folds configured to expand upon pressurization, in same general manner as described above with specific reference to the folds 26. It is preferable that such expansion is allowed to occur both longitudinally, and transversely so that the housing becomes spaced further from the battery in substantially all directions.

Whilst the invention has been described above with specific reference to embodiments in which a housing 3 is provided to substantially enclose the battery, it should be appreciated that there may be provided a structure defining said enclosed space, with at least part of the structure being defined by the structure of the motor vehicle itself. For example, it is envisaged that in an example of such an arrangement the battery could be located generally above and hence supported by part of the vehicle's chassis, and generally below the hood or bonnet of the vehicle when the hood or bonnet is closed. In such an arrangement, the housing could take the form or a peripheral wall extending substantially around the energy storage device so as to define said enclosed space in combination with the chassis and the hood or bonnet when the hood or bonnet is closed. An arrangement of this type would allow convenient access to the battery simply by lifting the hood or bonnet in a conventional manner, thereby effectively opening the enclosed space defined around the battery.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

The following clauses describe preferred aspects of the invention..
A. A safety arrangement (1) for a motor vehicle comprising an electrical energy storage unit (2), the arrangement comprising: a structure (3) configured to define a substantially enclosed space (8) around said storage unit (2); a source (9) of compressed gas (10) provided in fluid communication with said enclosed space (8); and a flow-release actuator (13), the flow-release actuator (13) being actuable upon receipt of an actuation signal so as to release a flow (18) of gas from said source (9) and into said space (8), the arrangement being configured such that said flow (18) is effective to raise the internal pressure within said space above atmospheric pressure.
B. A safety arrangement according to clause A, wherein at least part of said structure (3) is substantially expandable so as to expand upon the flow (18) of said gas into said space (8).
C. A safety arrangement according to clause B, wherein said structure (3) is configured such that expansion of said expandable part is effective to increase the volume of said space (8).
D. A safety arrangement according to clause B or clause C, wherein said expandable part of said structure (3) has an initial folded configuration, and is configured so as to at least partially unfold and thereby expand upon the flow (18) of said gas into said space (8).
E. A safety arrangement according to any one of clauses B to D, suitable for use with a said electrical storage unit (2) of a type comprising a plurality of sub-units (4) electrically connected in series, the safety arrangement being configured such that expansion of said expandable part (26) is effective to electrically disconnect said sub-units (4) from one another.
F. A safety arrangement according to clause E, wherein said sub-units (4) are each secured to respective parts of said structure (3) and are electrically connected to one another by breakable connections (27), said structure (3) being configured such that expansion of said expandable part (26) of the structure is effective to move said respective parts away from one another, thereby breaking said connections (27).
G. A safety arrangement according to any one of clauses B to F, configured such that expansion of said expandable part (19) is effective to at least partially discharge said storage unit (2).
H. A safety arrangement according to clause G, wherein said expandable part (19) is provided within said substantially enclosed space (8), and is arranged such that its expansion is effective to move at least one discharge resistor (24) into electrical connection with said storage unit (2).
I. A safety arrangement according to clause H, wherein at least one aperture (21) is provided through said expandable part (19) and the expandable part is positioned substantially across an inlet for said flow (18) in to said space.
J. A safety arrangement according to clause H, where the or each said discharge resistor (24) is mounted to said expandable part (19) of the structure (3).
K. A safety arrangement according to clause I, suitable for use with a said electrical storage unit (2) of a type comprising a plurality of sub-units (4) electrically connected in series, comprising a plurality of said discharge resistors (24) mounted to said expandable part (19), each said resistor (24) being arranged for electrical connection across a respective said sub-unit (4) upon expansion of said expandable part (19).
L. A safety arrangement according to any preceding clause, wherein at least one vent aperture (3a) is provided in said structure (3).
M. A safety arrangement according to any preceding clause, wherein said structure comprises a housing (3) configured to substantially define said substantially enclosed space (8).
N. A motor vehicle comprising a safety arrangement (1) according to any preceding clause.
O. A motor vehicle according to clause N, wherein said structure (1) is at least partly defined by the structure of the motor vehicle.

## Claims

1. A safety arrangement (1) for a motor vehicle comprising an electrical energy storage unit (2), the arrangement comprising: a structure (3) configured to define a substantially enclosed space (8) around said storage unit (2); a source (9) of compressed gas (10) provided in fluid communication with said enclosed space (8); and a flow-release actuator (13), the flow-release actuator (13) being actuable upon receipt of an actuation signal so as to release a flow (18) of gas from said source (9) and into said space (8), the arrangement being configured such that said flow (18) is effective to raise the internal pressure within said space above atmospheric pressure; wherein at least part of said structure (3) is substantially expandable, so as to expand upon the flow (18) of said gas into said space (8); and wherein the arrangement is configured such that expansion of said expandable part (19) is effective to at least partially discharge said storage unit (2).

2. A safety arrangement according to claim 1, wherein said expandable part of said structure (3) has an initial folded configuration, and is configured so as to at least partially unfold and thereby expand upon the flow (18) of said gas into said space (8).

3. A safety arrangement according to any preceding claim, suitable for use with a said electrical storage unit (2) of a type comprising a plurality of sub-units (4) electrically connected in series, the safety arrangement being configured such that expansion of said expandable part (26) is effective to electrically disconnect said sub-units (4) from one another.

4. A safety arrangement according to claim 3, wherein said sub-units (4) are each secured to respective parts of said structure (3) and are electrically connected to one another by breakable connections (27), said structure (3) being configured such that expansion of said expandable part (26) of the structure is effective to move said respective parts away from one another, thereby breaking said connections (27).

5. A safety arrangement according to any previous claim, wherein said expandable part (19) is provided within said substantially enclosed space (8), and is arranged such that its expansion is effective to move at least one discharge resistor (24) into electrical connection with said storage unit (2).

6. A safety arrangement according to claim 5, wherein at least one aperture (21) is provided through said expandable part (19) and the expandable part is positioned substantially across an inlet for said flow (18) into said space.

7. A safety arrangement according to claim 5, where the or each said discharge resistor (24) is mounted to said expandable part (19) of the structure (3).

8. A safety arrangement according to claim 6, suitable for use with a said electrical storage unit (2) of a type comprising a plurality of sub-units (4) electrically connected in series, comprising a plurality of said discharge resistors (24) mounted to said expandable part (19), each said resistor (24) being arranged for electrical connection across a respective said sub-unit (4) upon expansion of said expandable part (19).

9. A safety arrangement according to any preceding claim, wherein at least one vent aperture (3a) is provided in said structure (3).

10. A safety arrangement according to any preceding claim, wherein said structure comprises a housing (3) configured to substantially define said substantially enclosed space (8).

11. A motor vehicle comprising a safety arrangement (1) according to any preceding claim.

12. A motor vehicle according to claim 11, wherein said structure (1) is at least partly defined by the structure of the motor vehicle.

## Amended claims

### Amended claims in accordance with Rule 137(2) EPC.

**1.** A safety arrangement (1) for a motor vehicle comprising an electrical energy storage unit (2), the arrangement comprising: a structure (3) configured to define a substantially enclosed space (8) around said storage unit (2); a source (9) of compressed gas (10) provided in fluid communication with said enclosed space (8); and a flow-release actuator (13), the flow-release actuator (13) being actuable upon receipt of an actuation signal so as to release a flow (18) of gas from said source (9) and into said space (8), the arrangement being configured such that said flow (18) is effective to raise the internal pressure within said space above atmospheric pressure; the arrangement being **characterised in that** at least part of said structure (3) is substantially expandable, so as to expand upon the flow (18) of said gas into said space (8); and wherein the arrangement is configured such that expansion of said expandable part (19) is effective to at least partially discharge said storage unit (2).

**2.** A safety arrangement according to claim 1, wherein said expandable part of said structure (3) has an initial folded configuration, and is configured so as to at least partially unfold and thereby expand upon the flow (18) of said gas into said space (8).

**3.** A safety arrangement according to any preceding claim, suitable for use with a said electrical storage unit (2) of a type comprising a plurality of sub-units (4) electrically connected in series, the safety arrangement being configured such that expansion of said expandable part (26) is effective to electrically disconnect said sub-units (4) from one another.

**4.** A safety arrangement according to claim 3, wherein said sub-units (4) are each secured to respective parts of said structure (3) and are electrically connected to one another by breakable connections (27), said structure (3) being configured such that expansion of said expandable part (26) of the structure is effective to move said respective parts away from one another, thereby breaking said connections (27).

**5.** A safety arrangement according to any previous claim, wherein said expandable part (19) is provided within said substantially enclosed space (8), and is arranged
